Europäisches Patentamt

(19) European Patent Office

Office européen des brevets

(11) Numéro de publication: **0 165 836**
**B1**

(12) **FASCICULE DE BREVET EUROPÉEN**

(45) Date de publication du fascicule du brevet:
12.08.87

(51) Int. Cl.⁴: **B 64 C 25/14**

(21) Numéro de dépôt: **85400907.3**

(22) Date de dépôt: **10.05.85**

(54) Train d'atterrissage, de préférence à roues en tandem et amortisseurs independants.

(30) Priorité: **15.05.84 FR 8407488**

(43) Date de publication de la demande:
**27.12.85 Bulletin 85/52**

(45) Mention de la délivrance du brevet:
**12.08.87 Bulletin 87/33**

(84) Etats contractants désignés:
**FR GB IT**

(56) Documents cité:
**FR-A-1 404 499**
**GB-A-877 505**
**GB-A-1 475 882**
**US-A-2 941 755**

(73) Titulaire: **MESSIER- HISPANO- BUGATTI (S.A), 5, rue Louis Lejeune, F-92120 Montrouge (FR)**

(72) Inventeur: **Veaux, Jacques, 16, Boulevard de la Liberté, F-92320 Chaillon (FR)**
Inventeur: **Derrien, Michel, 16, rue du Parc de Clagny, F-78000 Versailles (FR)**

(74) Mandataire: **Chevallier, Robert Marie Georges, Cabinet BOETTCHER 23, rue La Boétie, F-75008 Paris (FR)**

LIBER, STOCKHOLM 1987

## Description

L'invention a pour objet un train d'atterrissage rétractable ayant au moins une roue et de préférnece deux roues disposées en tandem, destiné plus particulièrement à être attaché à la partie inférieure du fuselage d'un avion.

On connaît déjà des trains d'atterrissage dits "à tandem". La demanderesse en fabrique et en commercialise de nombreux types depuis fort longtemps. Cependant, parmi ceux-ci, tous ne peuvent pas répondre à certaines possibilités d'accrochage aux structures d'aéronefs.

Par ailleurs, le document FR-A-1 404 499 correspondant au préambule de la revendication 1, décrit un train d'atterrissage escamotable à quatre ensembles indépendants ayant chacun deux roues montées en tandem. Chaque roue est portée sous l'aéronef par l'extrémité libre d'un bras qui est articulé par son extrémité opposée sur la structure de l'aéronef autour d'un axe d'articulation; cet axe sert aussi à l'articulation d'une extrémité d'un levier dont la partie médiane sert à l'articulation d'un amortisseur qui s'étend jusqu'à l'essieu de la roue; en outre les extrémités libres des deux leviers de chaque ensemble sont réunies par une bielle. Un vérin articulé entre les deux leviers sert à imposer à l'ensemble les mouvements de rentrée et de sortie de cet ensemble. Mais dans un tel train rien n'est prévu pour que les amortisseurs soient contraints de se rétracter jusqu'à leur longueur la plus faible possible pendant le mouvement de rentrée de l'ensemble.

Le but principal de l'invention est de réaliser un train d'atterrissage pour fuselage, de préférence du type à roues en tandem se relevant dans un plan parallèle au fuselage, de conception simplifiée et d'un poids aussi réduit que possible afin que le train relevé occupe le volume le plus réduit possible.

Dans un train d'atterrissage relevable ayant au moins une roue et de préférence deux roues en tandem disposées dans un même plan pour être rétractable dans ce plan, comprenant en combinaison avec chaque roue un balancier portant cette roue et un amortisseur, conformément à l'invention ce train comprend en plus une bielle oscillante articulée par une extrémité sur le fuselage à un niveau supérieur à celui du balancier, ï'amortisseur étant articulé avec l'extrême libre de la bielle et la partie extrême libre du balancier, une barre de liaison reliant les deux bielles dans le cas où le train a deux roues en tandem, un vérin de manoeuvre attelé à la bielle ou à la barre de liaison, chaque bielle étant pourvue d'un prolongement latéral dans sa partie extrême articulée avec l'amortisseur sur le côté où se forme un angle obtus entre cette bielle et l'amortisseur pendant la rétraction du train, cependant qu'une biellette télescopique de longueur maximale déterminée est d'une part articulée par une extrémité avec ce prolongement latéral et d'autre part liée par son extrémité opposée à l'extrémité de l'amortisseur voisin de la roue, ladite extrémité de chaque prolongement latéral ayant une position qui correspond à une extension maximum de l'amortisseur quand le train est sorti et une position qui correspond à une rétraction maximum, sans charge sur la roue, du même amortisseur quand le train est rétracté.

De préférence, en position de développement du train, chaque bielle et chaque amortisseur sont situés sur une ligne brisée d'un côté de la ligne droite joignant d'une part l'articulation de l'amortisseur avec le balancier, d'autre part l'articulation de la bielle par rapport au fuselage, et en position de rétraction du train la même bielle et le même amortisseur se trouvent de l'autre côté de la même ligne droite. Avantageusement, ladite ligne brisée est peu différente de la ligne droite.

L'invention n'interfère pas avec le nombre de roues adopté pour composer le train d'atterrissage; elle est compatible avec l'emploi d'une seule roue ou de plusieur roues disposées en tandem.

On donnera maintenant, sans intention limitative et sans exclure aucune variante, une description d'un exemple de réalisation d'un train d'atterrissage à deux roues. On se reportera aux dessins annexés dans lesquels:

- la figure 1 est une vue de côté d'un train d'atterrissage conforme à l'invention dessiné en trait plein en position d'extension ou d'utilisation et en trait mixte en position de rétraction ou de relevage,

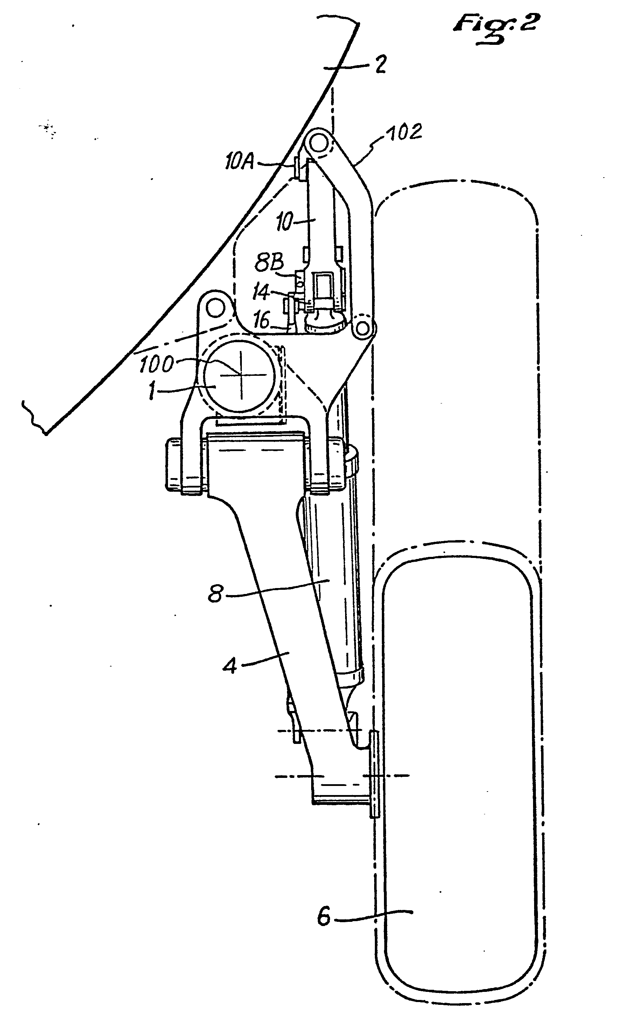

- la figure 2 est une vue de l'avant du train d'atterrissage de la figure 1. On appelle ici, par commodité, train d'atterrissage un jeu escamotable de deux roues montées en tandem sur un premier côté du fuselage d'un avion. Il est évident que ce dernier est équipé sur le côté opposé du fuselage d'un jeu escamotable symétrique au jeu situé du premier côté.

Dans l'exemple décrit ici le train est attaché au fuselage à l'aide de chapes et d'éléments de liaison dont la configuration est adaptée aux besoins en vue de la fixation du train d'atterrissage à deux cadres solides du fuselage. Le train d'atterrissage comprend plus précisément une poutre longitudinale 1, soliement fixée parallèlement au fuselage 2 comme expliqué ci-dessus suivant un axe 100 et sur laquelle sont articulés par une extrémité un premier balancier 3 et un second balancier 4, respectivement aux extrémités opposées de cette poutre 1. A l'extrémité opposée, qui est son extrémité inférieure, de chaque balancier 3, 4 est montée une roue 5, 6 respectivement; à proximité de l'axe de la roue 5, 6 la même extrémité inférieure de chaque balancier 3, 4 articulée avec une extrémité d'un amortisseur 7, 8 respectivement, de préférence du type oléo-pneumatique à double effet de laminage, connu en soi.

A un niveau supérieur à celui de chaque balancier 3, 4 est articulée par rapport au fuselage 2 une bielle oscillante 9, 10 respectivement, cette dernière est elle-même articulée par son extrémité opposée, qui est son extrémité inférieures, avec l'extrémité supérieure de l'amortisseur correspondant 7, 8.

Chaque roue 5, 6 constitue un ensemble relevable avec le balancier 3, 4, l'amortisseur 7, 8 et la bielle 9, 10 qui lui correspondent. Ainsi qu'il apparaîtra plus loin, l'invention pourrait être utilisée avec un seul de ces ensembles ou avec plus de deux ensembles, trois par exemple, rétractables dans le plan où ils se trouvent en position d'utilisation.

Quand on emploie deux ensembles, comme dans le mode de réalisation décrit ici, une barre de liaison 11 est articulée avec les deux bielles 9, 10 dans une position où elle est parallèle au fuselage 2. On obtient ainsi un parallélogramme articulé qui est déformable sous l'action d'un vérin 12 articulé par une extrémité sur le fuselage 2 et attelé par son extrémité opposée soit avec la barre de liaison 11 à proximité de l'articulation de celle-ci avec la bielle 10, soit, en variante, directement avec cette dernière. Quand on emploie un seul ensemble défini plus haut, le vérin 12, ou tout organe de manoeuvre équivalent, est attelé à la bielle 10. Quand il existe plus de deux ensembles, la barre de liaison 11, ou plusieurs barres successives montées en prolongement, réunissent les bielles.

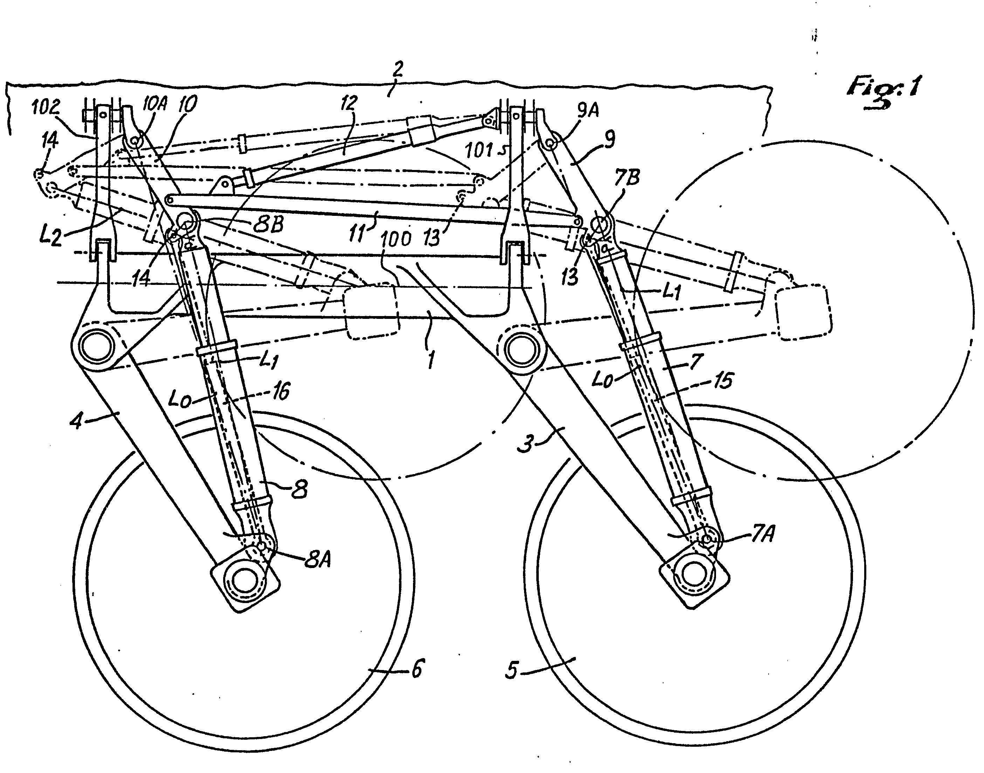

Quand le train est sorti, en position d'utilisation, le vérin 12 est bloqué, par exemple à l'aide de griffes, comme il est connu; il stabilise le parallélogramme articulé dans une configuration préférée où, dans chaque ensemble, la ligne qui part de l'articulation 7A ou 8A de l'amortisseur 7 ou 8 avec le balancier 3, 4, qui passe par l'articulation 7B ou 8B du même amortisseur 7 ou 8 avec la bielle 9 ou 10, qui arrive à l'articulation 9A ou 10A de la bielle 9 ou 10 par rapport au fuselage 2, est une ligne brisée L1 qui s'écarte peu de la ligne droite Lo qui part de l'articulation 7A ou 8A de l'amortisseur 7 ou 8 avec le balancier 3, 4 pour arriver à l'articulation 9A ou 10A de la bielle 9 ou 10 avec le fuselage 2. La ligne brisée L1 se trouve sur un côté de la ligne droite Lo. Quand le vérin 12 est mis en action pour le relevage ou la rétraction du train, il agit dans un sens tel que la ligne brisée L1 se rapproche de la ligne Lo, se confond avec elle, puis la dépasse sur le côté opposé pour former une nouvelle ligne brisée L2 qui présente un angle obtus extérieur, comme dessiné en trait mixte sur la figure 1.

Chaque bielle 9, 10 est pourvue d'un prolongement latéral 13, 14 dans sa partie extrême où elle est articulée, en 7B ou en 8B, avec l'amortisseur 7, 8 correspondant. Le prolongement 13, 14 est situé par rapport à la ligne brisée L1 du côté où se forme l'angle obtus extérieur défini ci-dessus en position de rétraction du train d'atterrissage.

Une biellette télescopique 15, 16 est articulée par ses extrémités opposées d'une part avec le prolongement latéral 13, 14 de chaque bielle 9, 10 et d'autre part autour de l'axe prolongé en conséquence de l'articulation 7A ou 8A de l'amortisseur 7 ou 8 avec le balancier 3 ou 4. Chaque biellette télescopique 15, 16 a une longueur maximum qui correspond à la longueur maximum de l'amortisseur 7, 8 avec lequel elle est combinée; elle peut se raccourcir à partir de cette longueur afin d'accompagner l'amortisseur pendant le travail de ce dernier.

Chaque prolongement latéral 13, 14 est disposé pour que son eextrémité libre occupe quand le train est sorti, une position permettant une extension maximum de l'amortisseur 7, 8 pendant l'utilisation et, au contraire, pour qu'elle occupe quand le train est rétracté, une position qui correspond à une rétraction notable, de préférence maximum, sans charge sur la roue, de ce même amortisseur.

Dans le présent exemple, quand le train d'atterrissage est sorti, chaque prolongement latéral 13, 14 de chaque bielle 9, 10 s'étend dans une direction qui fait un angle aigu $\underline{a}$ avec la direction de l'axe géométrique L2 de l'amortisseur 7, 8 correspondant.

Cet angle aigu $\underline{a}$ est choisi à une valeur telle que lorsque le train d'atterrissage est relevé ou rentré, chaque prolongement latéral 13, 14 se trouve dans une direction qui est sensiblement parallèle à celle de l'axe géométrique de l'amortisseur 7, 8, en sens opposé à ce dernier, de sorte que chaque biellette 15, 16 a exercé sur cet amortisseur 7, 8 un effort de traction dans le sens de son raccourcissement ainsi que le montre bien la figure 1.

Avantageusement, au moins l'une des articulations 9A ou 10A, est reliée à la poutre 1 par un contrefort 101, 102 reliant ces deux articulations 9A, 10A à la poutre 1, ce ou ces contreforts 101, 102 permettant ainsi de constituer un train rigide ne nécessitant pas des points d'accrochage de grande résistance, étant donné que tous les efforts auquel est soumis cet atterrisseur sont absorbés essentiellement par la poutre.

De ce fait, le train d'atterrissage relevé a un encombrement minimum; ce résultat est obtenu par un moyen extrêmement simple qui n'augmente pratiquement pas ni le poids ni le volume général ni le coût de train d'atterrissage.

## Revendications

1. Train d'atterrissage relevable ayant au moins une roue et de préférence deux roues (5, 6) en tandem disposées dans un même plan pour être rétractable dans ce plan, comprenant en combinaison avec chaque roue (5, 6) un balancier (3, 4) portant cette roue et un amortisseur (7, 8), caractérisé en ce qu'il comprend en plus une bielle oscillante (9, 10) articulée par une extrémité sur le fuselage à un niveau supérieur à celui du balancier (3, 4), un l'amortisseur (7, 8) étant articulé avec l'extrémité libre de la bielle (9, 10) et la partie extrême libre du balancier (3, 4), une barre de liaison (17) reliant les deux bielles (9, 10) dans le cas où le train a deux roues en tandem, un vérin de manoeuvre (12) attelé à la bielle (10) ou à la barre de liaison (11), chaque bielle (9, 10) étant pourvue d'un prolongement latéral (13, 14) dans sa partie extrême (7B, 8B) articulée avec l'amortisseur (7, 8) sur le côté où se forme un angle obtus entre cette bielle (9, 10) et l'amortisseur (7, 8) pendant la rétraction du train, cependant qu'une biellette télescopique (15, 16) de longueur maximale déterminée est d'une part articulée par une extrémité avec ce prolongement latéral (13, 14) et d'autre part liée par son extrémité opposée à l'extrémité de l'amortisseur (7, 8) voisin de la roue (5, 6), ladite extrémité de chaque prolongement latéral (13, 14) ayant une position qui correspond à une extension maximum de l'amortisseur (7, 8) quand le train est sorti et une position qui correspond à une rétraction maximum, sans charge sur la roue, du même amortisseur quand le train est rétracté.

2. Train d'atterrissage selon la revendication 1, caractérisé en ce qu'en position de sortie du train, chaque bielle (9, 10) et chaque a mortisseur (7, 8) sont situés sur une ligne brisée (L1) à angle obtus où est prévu ledit prolongement latéral (13, 14) d'un côté de la ligne droite (Lo) joignant d'une part l'articulation (7A, 8A) de l'amortisseur (7, 8) avec le balancier (3, 4), d'autre part l'articulation (9A, 10A) de la bielle (9, 10) avec le fuselage (2), et en position de rétraction du train la même bielle (9, 10) et le même amortisseur (7, 8) sont situés de l'autre côté de la même ligne droite (Lo).

3. Train d'atterrissage selon la revendication 1, caractérisé en ce que, à l'état sorti du train, chaque prolonge ment latéral (13, 14) a une direction qui fait un angle aigu (a) avec la direction géométrique de l'amortisseur (7, 8) correspondant.

4. Train d'atterrissage selon la revendication 3, caractérisé en ce que l'angle aigu (a) est choisi à une valeur telle que, en position de rétraction du train, chaque prolongement latéral (13, 14) a une direction qui est sensiblement parallèle à celle de l'axe géométrique de l'amortisseur correspondant (7, 8) en sens opposé à ce dernier par rapport à l'articulation de cet amortisseur avec la bielle (9, 10).

5. Train d'atterrissage selon l'une quelconque des revendications 1 à 4, caractérisé en ce qu'il comporte des moyens de l'aison en contrefort (101, 102) reliant les extrémités d'attache des bielles oscillantes (9, 10) au moyen de support des balanciers (3, 4).

**Patentansprüche**

1. Einziehbares Fahrgestell mit mindestens einem Rad und mit vorzugsweise zwei Rädern (5, 6) in Tandemanordnung, die in einer gleichen Ebene liegen, um in diese Ebene einziehbar zu sein, wobei in Kombination mit jedem Rad (5, 6) ein Schwinghebel (3, 4) vorhanden ist, der dieses Rad trägt, sowie ein Stossdämpfer (7, 8), dadurch gekennzeichnet, dass das Fahrgestell ferner ein Schwingelement (9, 10) umfasst, das an einem Ende am Rumpf auf einem höheren Niveau als der Schwinghebel (3, 4) befestigt ist, dass der Stossdämpfer (7, 8) mit dem freien Ende des Schwingelementes (9, 10) und dem freien Endabschnitt des Schwinghebels (3, 4) gelenkig verbunden ist, dass eine Verbindungsstange (11) die beiden Schwingelemente (9, 10) miteinander verbindet, falls das Fahrgestell zwei Räder in Tandemanordnung besitzt, dass ein Betätigungszylinder (12) mit dem Schwingelement (10) oder der Verbindungsstange (11) gekoppelt ist, jedes Schwingelement (9, 10) an seinem Endabschnitt (7B, 8B) mit einem seitlichen Ansatz (13, 14) versehen ist, der mit dem Stossdämpfer (7, 8) auf der Seite gelenkig verbunden ist, wo ein stumpfer Winkel zwischen dem Schwingelement (9, 10) und dem Stossdämpfer (7, 8) während des Einziehens des Fahrgestells gebildet wird, wohingegen ein Teleskop-Schwinghebel (15, 16) mit bestimmter Maximallänge einerseits mit einem Ende an dem seitlichen Ansatz (13, 14) gelenkig verbunden ist und andererseits mit seinem gegenüberliegenden Ende mit dem benachbart zum Rad (5, 6) liegenden Ende des Stossdämpfers (7, 8) verbunden ist, und das Ende eines jeden seitlichen Ansatzes (13, 14) eine Stellung hat, die einer maximalen Ausdehnung des Stossdämpfers (7, 8) entspricht, wenn das Fahrwerk ausgefahren ist und einer Position, die einer maximalen Verkürzung des gleichen Stossdämpfers bei unbelastetem Rad entspricht, wenn das Fahrwerk eingezogen ist.

2. Fahrgestell nach Anspruch 1, dadurch gekennzeichnet, dass in der ausgefahrenen Stellung des Fahrgestells jedes Schwingelement (9, 10) und jeder Stossdämpfer (7, 8) auf einer unter einem stumpfen Winkel verlaufenden strichpunktierten Linie (L1) liegen, auf welcher der seitliche Ansatz (13, 14) an einer Seite der Geraden (Lo) liegt, die einerseits an der Gelenkverbindung (7A, 8A) des Stossdämpfers (7, 8) mit dem Schwinghebel (3, 4) anliegt, und andererseits an der Gelenkverbindung (9A, 10A) des Schwingelementes (9, 10) mit dem Rumpf (2), wobei in der eingefahrenen Stellung des Fahrwerks sich dieses gleiche Schwingelement (9, 10) und der gleiche Stossdämpfer (7, 8) auf der anderen Seite dieser gleichen Linie (Lo) befinden.

3. Fahrgestell nach Anspruch 1, dadurch gekennzeichnet, dass im ausgefahrenen Zustand des Fahrwerks jeder seitliche Ansatz (13, 14) eine Richtung aufweist, die einen spitzen Winkel (a) mit der geometrischen Richtung des zugehörigen Stossdämpfers (7, 8) bildet.

4. Fahrgestell nach Anspruch 3, dadurch gekennzeichnet, dass der spitze Winkel (a) mit einem solchen Wert gewählt wird, dass in der eingefahrenen Stellung des Fahrwerks jeder seitliche Ansatz (13, 14) eine Richtung aufweist, die im wesentlichen parallel zur Richtung der geometrischen Achse des zugehörigen Stossdämpfers (7, 8) verläuft und in entgegengesetzter Richtung zu diesem, bezogen auf den Gelenkpunkt des Stossdämpfers mit dem Schwinghebel (9, 10).

5. Fahrgestell nach einem der Ansprüche 1 bis 4, dadurch gekennzeichnet, dass es als Strebe (101, 102) ausgebildete Verbindungseinrichtungen aufweist, die die Befestigungsenden der Schwingelemente (9, 10) mit der Haltevorrichtung der Schwinghebel (3, 4) verbinden.


**Claims**

1. A retractable undercarriage train comprising at least one wheel and preferably two wheels (5, 6) in tandem arrangement and disposed in the same plane to be retractable in said plane, comprising in combinitaion with each wheel (5, 6) a pivoting arm (3, 4) carrying said wheel and a damper (7, 8), characterised in that it further comprises an oscilating strut (9, 10) pivotally mounted by means of one end to the fuselage at a level higher than that of the pivoting arm (3, 4), the damper (7, 8) being pivotally connected to the free end of the strut (9, 10) and the free end part of the pivoting arm (3, 4), a connecting bar (11) connecting the two struts (9, 10) when the train has two wheels in a tandem configuration, an operating jack (12) coupled to the strut (10) or to the connecting bar (11), each strut (9, 10) being provided with a lateral extension (13, 14) in its end part (7B, 8B) which is pivotally connected to the damper (7, 8) on the side where an obtuse angle is formed between said strut (9, 10) and the damper (7, 8) during retraction of the train, while a telescopic link (15, 16) of given maximum length is on the one hand pivotally connected by means of one end to said lateral extension (13, 14) and on the other hand connected by means of its opposite end to the end of the damper (7, 8) adjacent the wheel (5, 6), said end of each lateral extension (13, 14) being in a position which corresponds to maximum extension of the damper (7, 8) when the train is extended and a position which corresponds to maximum retraction, without load on the wheel, of the same damper when the train is retracted.

2. An undercarriage train according to claim 1 characterised in that, in the undercarriage down position, each strut (9, 10) and each damper (7, 8) are disposed on a broken line (L1) at an obtuse angle where said lateral extension (13, 14) is provided, on one side of the straight line (Lo) joining on the one hand the pivot connection (7A, 7B) of the damper (7, 8) to the pivoting arm (3, 4), and on the other hand the pivot connection (9A, 10A) of the strut (9, 10) to the fuselage (2), and in the undercarriage retracted position the same strut (9, 10) and the same damper (7, 8) are disposed on the other side of the same straight line (Lo).

3. An undercarriage train according to claim 1 characterised in that, in the undercarriage down condition, each lateral extension (13, 14) extends in a direction which is at an acute angle (a) to the geometrical direction of the corresponding damper (7, 8).

4. An undercarriage train according to claim 3 characterised in that the acute angle (a) is selected to be of a value such that, in the undercarriage retracted position, each lateral extension (13, 14) extends in a direction which is substantially parallel to that of the geometrical axis of the corresponding damper (7, 8) in the opposite direction to the latter with respect to the pivot connection of said damper to the strut (9, 10).

5. An undercarriage train according to any one of claims 1 to 4 characterised in that it comprises buttressing connecting means (101, 102) connecting the attachment ends of the oscillating struts (9, 10) by means of a carrier for the pivoting arms (3, 4).

Fig:1

Fig.2